# EUROPÄISCHE PATENTSCHRIFT

(11) **EP 2 683 544 B1**
(45) Veröffentlichungstag und Bekanntmachung des Hinweises auf die Patenterteilung: **26.07.2017**
(21) Anmeldenummer: 12708538.9
(22) Anmeldetag: 08.03.2012
(51) Int. Cl.: B29C 70/52, B29C 47/02, B29B 15/10, B29L 31/06, F16C 7/02, B29B 15/12, B29C 47/00, D07B 1/02, D07B 1/16, D07B 1/22

(54) **VERFAHREN UND VORRICHTUNG ZUR HERSTELLUNG EINES FASERVERSTÄRKTEN VERBUNDWERKSTOFFS UND INSBESONDERE EINES ZUGTRÄGERS**
METHOD AND DEVICE FOR PRODUCING A FIBER-REINFORCED COMPOSITE MATERIAL, IN PARTICULAR A TENSION MEMBER
PROCÉDÉ ET DISPOSITIF DE PRODUCTION D'UN MATÉRIAU COMPOSITE RENFORCÉ PAR DES FIBRES ET NOTAMMENT D'UN TIRANT

(30) Priorität: 10.03.2011 DE 102011005329
(43) Veröffentlichungstag der Anmeldung: 15.01.2014
(73) Patentinhaber: SGL Carbon SE, 65201 Wiesbaden (DE)
(72) Erfinder: SCHMIDT, Tobias, 86405 Meitingen (DE); REIF, Bernd, 86405 Meitingen (DE)
(86) Internationale Anmeldenummer: PCT/EP2012/053955
(87) Internationale Veröffentlichungsnummer: WO 2012/120064

(56) Entgegenhaltungen:
- DE-C1- 4 419 691
- GB-A- 2 328 223
- US-A- 3 529 050
- US-A- 5 436 980
- US-A1- 2007 117 921
- US-A1- 2010 212 803

## Beschreibung

Die vorliegende Erfindung betrifft ein kontinuierliches Verfahren zur Herstellung eines faserverstärkten Verbundwerkstoffs, insbesondere eines Zugträgers, einen mit diesem Verfahren erhältlichen faserverstärkten Verbundwerkstoff, dessen Verwendung sowie eine Vorrichtung zur Herstellung eines solchen faserverstärkten Verbundwerkstoffs.

Faserverstärkte Verbundwerkstoffe bestehen aus in einer Matrix eingebetteten Fasern. Prominente Beispiele hierfür sind carbonfaserverstärkte Kunststoffe (CFK), welche aus einer beispielsweise aus Phenolharz oder Epoxidharz bestehenden Kunststoffmatrix, in welcher Carbonfasern oder Graphitfasern in einer oder mehreren Faserlagen eingebettet sind, zusammengesetzt sind, und carbonfaserverstärkte Kohlenstoffe (CFC), welche aus einer Kohlenstoffmatrix, in welcher Carbonfasern oder Graphitfasern in einer oder mehreren Faserlagen eingebettet sind, zusammengesetzt sind. Derartige Carbonfasern enthaltende Verbundwerkstoffe weisen insbesondere in der Faserrichtung eine hohe Festigkeit und Steifigkeit auf und zeichnen sich zudem im Vergleich zu anderen Materialien, wie beispielsweise Stahl, durch ein geringes Gewicht, durch eine niedrige Wärmeausdehnung und durch eine ausgezeichnete Temperaturwechselfestigkeit aus. Aufgrund dieser vorteilhaften Eigenschaften werden solche Carbonfasern enthaltende Verbundwerkstoffe in vielen technischen Gebieten eingesetzt, wie beispielsweise als gurtförmige Tragmittel für Lastanwendungen, z.B. für Aufzugsysteme, wie diese in der WO 2009/090299 A1 beschrieben sind.

Derartige Tragmittel bzw. die darin enthaltenen Zugträgerversprechen erhebliche Vorteile gegenüber herkömmlichen Zugträgern, die aus verseilten Stahllitzen oder unimprägnierten Fasern gebildet sind. Besonders geeignet für den Einsatz in Aufzugsystemen sind derartige Zugträger bzw. Tragmittel, welche gurtartig ausgebildet sind, also eine größere Breite als Höhe besitzen, Um eine hohe Zugbelastbarkeit zu erreichen, ist es dabei notwendig, dass ein Großteil der Fasern im Wesentlichen in Längsrichtung des Zugträgers bzw. Tragmittels ausgerichtet ist. Es ist allerdings bisher kein Herstellungsverfahren bekannt, mit dem derartige Zugträger und Tragmittel kostengünstig und in hoher Qualität mit den für Zugträger und Tragmittel geforderten mechanischen und sonstigen Eigenschaften hergestellt werden können. Insbesondere ist kein Verfahren bekannt, mit dem kontrolliert und reproduzierbar eine bestimmte Anordnung und Verteilung gleichartiger oder verschiedenartiger Fasern in dem Verbundwerkstoff erreicht werden kann.

Aus der US 5,198,281 beispielsweise ist es bekannt, ein Faserbündel durch einen Spreizvorgang zu vereinzeln und die Fasern so mit einem Polymer zu beschichten, dass die Fasern vereinzelt bleiben. Die auf diese Weise beschichteten Einzelfasern werden in einem weiteren, von dem Beschichtungsschritt getrennten Schritt zu so genannten Towpregs, d.h. vorimprägnierten Geweben, verarbeitet. Die Towpregs werden dabei in einem diskontinuierlichen Verfahren hergestellt, weswegen das Herstellverfahren langsam und vergleichsweise teuer ist und die Länge der damit hergestellten Towpregs begrenzt ist. Ferner kann mit dem Verfahren eine bestimmte Verteilung und Anordnung der Fasern in dem erzeugten Towpreg nicht steuerbar und reproduzierbar erreicht werden.

In der US 6,131,285 A wird ein Verfahren zur Herstellung eines Faser-Metall-Verbundwerkstoffs für einen Karosserierahmen offenbart, bei dem mehrere Fasern durch Pultrusion mit einem Metallmaterial imprägniert werden. Ein derartiges Verfahren eignet sich aber nicht zur Herstellung von biegsamen Werkstoffen und somit auch nicht zur Herstellung von Zugträgern oder Tragmitteln für Aufzugsysteme. Außerdem weist der mit diesem Verfahren hergestellte Faser-Metall-Verbundwerkstoff eine ungleichmäßige und im Wesentlichen nicht steuerbare Verteilung der Fasern in der Metallimprägnierung auf, so dass gewünschte mechanische Eigenschaften des Werkstoffes nicht gezielt und reproduzierbar erreicht werden können.

Aus der US 5,607,531 A ist ein Verfahren zur Herstellung eines Faser-Verbundwerkstoffs bekannt, bei dem ein Faserbündel durch Spreizen vereinzelt wird und die einzelnen Fasern mit einem Polymer beschichtet werden und anschließend die Fasern gemeinsam zur Herstellung einer pultrudierten Stange aus faserverstärktem Verbundwerkstoff mit kreisförmigem Querschnitt durch eine Pultrusionsdüse gezogen und dadurch mit einem Polymer imprägniert werden. Die mit diesem Verfahren hergestellten Werkstoffe weisen allerdings nur eine unvollständige Ausrichtung der enthaltenen Fasern in der Längsrichtung des Werkstoffes auf. Außerdem ist es mit dem beschriebenen Verfahren nicht möglich, einen gurtförmigen Verbundwerkstoff mit einer größeren Breite als Höhe herzustellen, der eine steuerbare Verteilung und Anordnung der enthaltenen Fasern aufweist.

In der US 2007/117921 A1 ist ein Verfahren zur Herstellung eines bandförmigen Faserverbundwerkstoffs beschrieben, in welchem einzelne Rovings von Spulen abgezogen, durch ein der Endkontur entsprechendes Gitter gezogen, mit einem flüssigen, die Matrix bildenden Material imprägniert und mittels Pultrusion zu einem Band geformt und ausgehärtet werden.

In der US 3 529 050 A ist ein Verfahren beschrieben, in welchen einzelne textile Faserlagen übereinander geführt, mit einem flüssigen, die Matrix bildenden Material imprägniert und mittels Pultrusion zu einem Band geformt und ausgehärtet werden. Die US 3 529 050 offenbart ein Verfahren gemäß dem Oberbegriff des Anspruchs 1 und eine Vorrichtung gemäß dem Oberbegriff des Anspruchs 11. Aufgabe der Erfindung ist es daher, ein Verfahren zur Herstellung eines faserverstärkten Verbundwerkstoffs anzugeben, mit dem eine zumindest annähernd vollständige Ausrichtung der enthaltenen Fasern in der Längsrichtung des Werkstoffs erreicht wird und außerdem eine gewünschte Verteilung und Anordnung der Fasern in dem erzeugten Verbundwerkstoff mit einer hohen Genauigkeit und mit einer hohen Reproduzierbarkeit erreicht wird. Insbesondere soll ein kontinuierliches Verfahren angegeben werden, welches mit geringem Aufwand kostengünstig durchführbar ist und welches sich zum Erzeugen von gurtförmigen Verbundwerkstoffen eignet, die eine größere Breite als Höhe aufweisen und welche die zur Verwendung als Zugträger oder Tragmittel für Lastanwendungen wie zum Beispiel in Aufzugsystemen notwendigen Eigenschaften aufweisen.

Erfindungsgemäß wird diese Aufgabe gelöst durch ein kontinuierliches Verfahren zur Herstellung eines faserverstärkten Verbundwerkstoffs aus mehreren in einer Polymermatrix eingebetteten Fasern, insbesondere eines Zugträgers, welches die Schritte umfasst:
- Bereitstellen von wenigstens zwei Rovings,
- Spreizen der wenigstens zwei Rovings,
- Zusammenführen der wenigstens zwei gespreizten Rovings so, dass die wenigstens zwei zusammengeführten Rovings zumindest bereichsweise übereinander und/oder nebeneinander angeordnete Faserschichten ausbilden,
- Imprägnieren der wenigstens zwei zusammengeführten Rovings mit einem Polymer und/oder einem Polymervorläufer und
- Pultrudieren der wenigstens zwei imprägnierten Rovinge,
wobei zumindest einer der wenigstens zwei Rovings durch einen geregelten Spreizprozess gespreizt wird, wobei der geregelte Spreizprozess das Erfassen der aktuellen Spreizgüte des zumindest einen gespreizten Rovings und das Steuern des Spreizvorgangs dieses Rovings in Abhängigkeit von der erfassten aktuellen Spreizgüte umfasst. Erfindungsgemäß werden wenigstens zwei Rovings getrennt voneinander gespreizt, um wenigstens zwei voneinander getrennte gespreizte Rovings zu bilden, bevor diese unter Ausbildung von zwei zumindest bereichsweise übereinander angeordneten Faserschichten zusammengeführt werden.

Unter Spreizen eines Rovings wird dabei verstanden, dass der Roving in der Richtung quer zu der Förderrichtung, d.h. in der Breitenrichtung des Rovings, verbreitert wird. Mit anderen Worten bedeutet Spreizen im Sinne der vorliegenden Patentanmeldung, dass ein Roving auf einen Querschnitt gebracht wird, welcher breiter ist als der des ungespreizten Rovings. Aus einem Roving mit einem zylinderförmigen Querschnitt wird somit beim Spreizen ein Roving mit einem bandförmigen Querschnitt. Dabei wird die Verbreiterung dadurch erreicht, dass sich die Fasern des Rovings in Breitenrichtung des Rovings verteilen, wobei das Resultat im Idealfall ist, dass eine Monofilamentschicht erhalten wird, also eine Faserschicht, in welcher alle Fasern parallel nebeneinander vorliegen.

Zudem wird im Sinne der vorliegenden Patentanmeldung unter Pultrusion ausschließlich ein Formgebungsschritt verstanden, also ein Schritt ohne die vorherige Imprägnierung.

Im Rahmen der vorliegenden Erfindung wurde erkannt, dass, indem die zu der Herstellung eines faserverstärkten Verbundwerkstoffs eingesetzten Rovings durch eine wie vorstehend beschriebene Spreizung kontrolliert und reproduzierbar auf einen wohldefinierten, breiteren Querschnitt gebracht werden, die Verteilung der Fasern in dem Roving vergleichmäßigt wird, so dass das gespreizte Roving eine gleichmäßigere Verteilung des Fasern über seinen Querschnitt aufweist. Zudem werden bei der Spreizung die in dem Roving enthaltenen Fasern zumindest teilweise in der Längsrichtung des Rovings ausgerichtet, so dass das gespreizte Roving einen erhöhten Anteil von in Längsrichtung des Rovings und damit der Belastungsrichtung des späteren Tragmittels bzw. Zugträgers parallel ausgerichteten Fasern umfasst. Auf diese Weise wird die Anzahl der in dem Roving vorliegenden quer zu der Längsrichtung orientierten Fasern bzw. Faserabschnitte drastisch verringert. Alles in allem wird somit durch das Spreizen ein Roving mit einem im Vergleich zu einem ungespreizten Roving breiteren Querschnitt und einer gleichmäßigeren Verteilung von im Wesentlichen in Längsrichtung des Rovings, parallel ausgerichteten Fasern geschaffen.

Durch das Zusammenführen der gespreizten Rovings mit ihrer hervorragenden Faserverteilung und -ausrichtung zu zumindest bereichsweise übereinander und/oder nebeneinander liegenden Schichten, durch das Imprägnieren der zusammengeführten Rovings mit dem Polymer bzw- dem Polymervorläufer und die anschließende Pultrusion wird somit ein faserverstärkter Verbundwerkstoff geschaffen, der eine wohldefinierte Faserstruktur mit einer gewünschten Faserverteilung und einer parallelen Ausrichtung der einzelnen Fasern in der Längsrichtung des Verbundwerkstoffs aufweist. Aus diesem Grund eignet sich das erfindungsgemäße Verfahren insbesondere zur Herstellung von beispielsweise gurt- oder riemenförmigen Zugträgern mit einer größeren Breite als Höhe, in denen zwei oder mehr Faserschichten in Höhenrichtung des zu erzeugenden Gurtes oder Riemens übereinander liegend angeordnet sind.

Dabei ist es von besonderem Vorteil, dass mit dem erfindungsgemäßen Verfahren bestimmte gewünschte Anordnungen und Verteilungen von Fasern in dem Verbundwerkstoff gezielt und reproduzierbar erzeugt werden, indem zum Beispiel mehrere Rovings mit verschiedenen Anzahlen und Typen von Fasern zu einem geeigneten Querschnitt und einer gewünschten Faserverteilung aufgespreizt und daraus die gewünschte Gesamtstruktur schichtartig zusammengeführt wird.

Besonders gute Ergebnisse hinsichtlich der Verteilung und der Ausrichtung der Fasern insbesondere in Längsrichtung des Rovings werden erzielt, wenn bei dem Spreizen die Breite der Rovings um wenigstens 50 %, bevorzugt um wenigstens 75 %, besonders bevorzugt um wenigstens 100 %, ganz besonders bevorzugt um wenigstens 150 % und höchst bevorzugt um wenigstens 300 % erhöht wird. Dabei kann die Breite der Rovings bei dem Spreizen insbesondere bis zu 800 % erhöht werden.

Prinzipiell können im Rahmen der Erfindung die wenigstens zwei verwendeten Rovings mittels voneinander unabhängiger Spreizeinheiten oder mittels ein und derselben Spreizeinheit gespreizt werden.

Bevorzugt wird dabei zumindest eines der wenigstens zwei Rovings mittels einer Spreizeinheit gespreizt, welche zwei bevorzugt gekrümmte Walzen umfasst, zweischen denen ein Zwischenraum ausgebildet ist, durch den der zumindest eine Roving hindurch geführt wird. Eine solche Spreizeinheit ist besonders geeignet, um die Ausrichtung der einzelnen Fasern des gespreizten Rovings parallel zu der Längsrichtung des Rovings zu erreichen und um zudem eine steuerbare Verbreiterung des Rovings zu gewährleisten,

Um die Flexibilität des Verfahrens und die Güte der hergestellten Erzeugnisse noch weiter zu verbessern, wird erfindungsgemäß zumindest einer der wenigstens zwei Rovings durch einen geregelten Spreizprozess gespreizt wird, wobei der geregelte Spreizprozess das Erfassen der aktuellen Spreizgüte des zumindest einen gespreizten Rovings und das Steuern des Spreizvorgangs dieses Rovings in Abhängigkeit von der erfassten aktuellen Spreizgüte umfasst.

Das Erfassen der Spreizgüte kann das Erfassen zumindest eines Parameters des gespreizten Rovings umfassen, der vorzugsweise aus der Gruppe ausgewählt wird, die aus der Breite des gespreizten Rovings, dem Vorhandensein von Lücken in dem gespreizten Roving, der Verteilung von Lücken in dem gespreizten Roving und der Lage von Lücken in dem gespreizten Roving besteht. Vorteilhafterweise kann für den Parameter des gespreizten Rovings ein Sollwert vorgegeben werden und eine Regelung der Spreizung abhängig von einer Abweichung von dem erfassten Ist-Wert des Parameters von seinem Soll-Wert durchgeführt werden.

Gemäß einer weiteren bevorzugten Ausführungsform der vorliegenden Erfindung umfasst das Erfassen der aktuellen Spreizgüte das Aufnehmen und Auswerten eines ortsaufgelösten Bildes des gespreizten Rovings. Dadurch wird eine besonders wirkungsvolle Regelung des Spreizvorgangs erzielt. Ein solches ortsaufgelöstes Bild kann in einfacher Weise erzeugt und verarbeitet werden und dabei detaillierte Aufschlüsse über einzelne Paramater der aktuellen Spreizgüte liefern.

Um einen faserverstärkten Verbundwerkstoff mit einer besonders hohen Festigkeit und sonstigen vorteilhaften mechanischen Eigenschaften herzustellen, wird es in Weiterbildung des Erfindungsgedankens vorgeschlagen, in dem erfindungsgemäßen Verfahren Rovings einzusetzen, von denen wenigstens einer und bevorzugt alle Carbonfasern enthalten. Gute Ergebnisse werden dabei insbesondere erhalten, wenn wenigstens einer und bevorzugt alle der eingesetzten Rovings wenigstens zu 50 %, insbesondere bevorzugt wenigstens zu 80 %, besonders bevorzugt wenigstens zu 90 % und höchst bevorzugt vollständig aus Carbonfasern bestehen. In dem erfindungsgemäßen Verfahren können Rovings mit allen dem Fachmann bekannten Carbonfasern eingesetzt werden. Beispielsweise können die Carbonfasern durch Carbonisieren und ggf. anschließendes Graphitieren eines Kohlenstoffvorläufers, wie beispielsweise Polyacrylnitril oder Pech, hergestellt worden sein.

Bei nicht vollständig aus Carbonfasern bestehenden Rovings kann der restliche Faseranteil beispielsweise aus Glasfasern, Polymerfasern, wie Aramidfasern, Basaltfasern oder beliebigen Mischungen aus zwei oder mehr der vorstehenden Faserarten bestehen.

Ferner kann es für gewisse Anwendungen bevorzugt sein, wenn zumindest zwei Rovings eingesetzt werden, die sich hinsichtlich der Art der in den Rovings enthaltenen Fasern unterscheiden und/oder hinsichtlich der Menge der darin enthaltenen Fasern eines Typs oder mehrerer Typen unterscheiden. Auf diese Weise können die mechanischen Eigenschaften des erzeugten faserverstärkten Verbundwerkstoffs gezielt eingestellt werden. Beispielsweise kann ein Roving Fasern mit einer höheren Zugbelastbarkeit in Längsrichtung aufweisen, während ein anderer Roving biegsamere Fasern umfasst, um damit die mechanischen Eigenschaften des hergestellten Erzeugnisses geeignet zu steuern.

In Weiterbildung des Erfindungsgedankens wird es vorgeschlagen, wenigstens ein Roving, vorzugsweise Carbonfaserroving, mit einer Filamentanzahl zwischen 1.000 und 300.000, bevorzugt, zwischen 12.000 und 60.000 und besonders bevorzugt zwischen 24.000 und 50.000 einzusetzen. Ein zum Beispiel 24.000 oder 50.000 Filamente bzw. Fasern enthaltender Roving wird dabei auch als 24k-Roving bzw. 50k-Roving bezeichnet. Insbesondere diese Rovings lassen sich durch Spreizen besonders gut zu gespreizten Rovings mit gleichmäßiger Faserverteilung und hohem Ausrichtungsgrad der Fasern in Längsrichtung des Rovings verarbeiten.

Faserverstärkte Verbundwerkstoffe mit besonders guten mechanischen Eigenschaften und insbesondere besonders hohen Zugbelastbarkeiten werden mit dem erfindungsgemäßen Verfahren insbesondere erzielt, wenn zumindest ein Roving eingesetzt wird, dessen Fasern ein Längengewicht zwischen 1 und 10 g/m, bevorzugt zwischen 2 und 5 g/m und besonders bevorzugt zwischen 3 und 4 g/m aufweisen. Mit einer derart feinen Faserstruktur lässt sich eine besonders gute Haftung zwischen den Fasern und der Polymerimprägnierung und somit ein besonders starker Verbund in dem faserverstärkten Verbundwerkstoff erzeugen.

Aus demselben Grund wird bevorzugt zumindest ein Roving eingesetzt, dessen Fasern einen Durchmesser zwischen 5 und 10 µm und besonders bevorzugt zwischen 6 und 7 µm aufweisen.

Um die Haftung des Matrixmaterials an den Fasern in dem Verbundwerkstoff zu verbessern, wird es in Weiterbildung des Erfindungsgedankens vorgeschlagen, in dem erfindungsgemäßen Verfahren wenigstens einen Roving einzusetzen, der zumindest teilweise Fasern enthält, welche mit einer Schlichte beschichtet sind, wobei die Schlichte bevorzugt ein Polyurethan oder einen Epoxidester enthält. Eine derartige Schlichte wirkt als Haftvermittler zwischen den Fasern und dem Matrixmaterial, so dass durch die Verwendung der Schlichte eine besonders vollständige und fest anhaftende Imprägnierung der Fasern mit dem Polymer erreicht wird.

Gemäß einer vorteilhaften Ausführungsform der vorliegenden Erfindung werden die wenigstens zwei zusammengeführten Rovings mit einem Polymervorläufer imprägniert, welcher dann unmittelbar danach oder in einem späteren Verfahrensschritt zu dem Polymer ausgehärtet wird, Alternativ dazu können die wenigstens zwei zusammengeführten Rovings auch mit einem Polymer, insbesondere Elastomer, imprägniert werden. Als Polymervorläufer wird hier eine ein- oder mehrkomponentige Zusammensetzung bezeichnet, aus der das Polymer durch Aushärten bzw. durch Polymerisation herstellbar ist. Der wenigstens eine Polymervorläufer kann dabei beispielsweise reaktive Monomere und/oder Oligomere enthalten. Andererseits ist es auch möglich, dass der Polymervorlaufer unvernetztes Polymer enthält, welches durch Aushärten vernetzt wird. Durch die Verwendung eines Polymervorläufers wird eine besonders vollständige und gleichmäßige Durchdringung der Faserstruktur während der Imprägnierung erreicht, da der noch nicht ausgehärtete und ggf. geschmolzene Polymervorläufer eine niedrigere Viskosität aufweist als das dazu korrespondierende (geschmolzene) Polymer, so dass der Polymervorläufer während der Imprägnierung tief in die Faserstruktur eindringen kann. Als Aushärten des Polymervorläufers wird hier die Umsetzung des Polymervorläufers zu dem Polymer bezeichnet.

Als Polymervorläufer eignen sich für das erfindungsgemäße Verfahren insbesondere reaktive Thermoplastvorläufer und reaktive Duroplastvorläufer. Als reaktiver Thermoplastvorläufer wird hier ein Polymervorläufer bezeichnet, der durch Aushärten zu einem Thermoplast polymerisierbar ist, wohingegen als reaktiver Duroplastvorläufer ein Polymervorläufer bezeichnet wird, der durch Aushärten zu einem Duroplast vernetzbar ist oder durch Aushärten zu einem Duroplast polymerisierbar und vernetzbar ist. Der Thermoplast- bzw. Duroplastvorläufer wird dabei bevorzugt durch eine Wärmebehandlung ausgehärtet, wobei dem Thermoplast- bzw. Duroplastvorläufer zu diesem Zweck ein Katalysator zugegeben werden kann.

Grundsätzliche Beispiele für Polymervorläufer in Form reaktiver Thermoplastvorläufer, welche zu Thermoplasten ausgehärtet werden können, sind:
i) eine Mischung, welche wenigstens ein Monomer und ggf, wenigstens einen Katalysator umfasst,
ii) eine Mischung, welche wenigstens ein Oligomer und ggf. wenigstens einen Katalysator umfasst, oder
iii) eine Mischung, welche wenigstens ein Monomer, wenigstens ein Oligomer und ggf. wenigstens einen Katalysator umfasst.

Als Oligomer wird dabei ein Molekül bezeichnet, das zwischen 2 und weniger als 100 strukturell gleiche Wiederholungseinheiten enthält. Hingegen wird als Polymer ein Molekül bezeichnet, welches wenigstens 100 strukturell gleiche Wiederholungseinheiten enthält.

Durch die geeignete Wahl des eingesetzten Katalysators kann die Temperatur, ab welcher der Thermoplastvorläufer polymerisiert wird, gezielt eingestellt werden, so dass das Aushärten des Thermoplastvorläufers zu dem Thermoplast besonders kontrolliert durchgeführt werden kann.

Konkrete Beispiele für geeignete Thermoplastvorläufer sind Polyamidvorläufer, also Zusammensetzungen, welche bei dem Aushärten zu einem Polyamid polymerisieren. Für diesen Zweck kann beispielsweise eine Caprolactam und ggf. einen Katalysator enthaltende Mischung eingesetzt werden.

Gemäß einer weiteren bevorzugten Ausführungsform der vorliegenden Erfindung wird wenigstens ein reaktiver Duroplastvorläufer eingesetzt. Dieser kann beispielsweise aus der Gruppe ausgewählt werden, welche aus Phenolharzen, Polyurethanharzen, Epoxidharzen, Polyesterharzen und Vinylesterharzen besteht.

Bei dieser Ausführungsform können als Duroplastvorläufer Mischungen aus entsprechenden Monomeren, ggf. Oligomeren und ggf, Katalysator eingesetzt werden, welche während dem Aushärten polymerisieren und vernetzen, oder bereits Polymere, welche unvernetzt oder nur schwach vorvernetzt sind, welche dann bei dem Aushärten vernetzt bzw. vollständig vernetzt werden.

Phenoplaste sind duroplastische Kunststoffe auf der Basis von durch Polykondensation hergestelltem Phenolharz, weswegen sich als Phenoplastvorläufer beispielsweise Mischungen aus einem Phenol, einem Aldehyd und einer Säure oder Base als Katalysator eignen. Hingegen handelt es sich bei duroplastischen Polyurethanen um vernetzte, Urethangruppen enthaltende Polymere, welche in vorteilhafter Weise durch eine Polyadditionsreaktion aus Polyolen und Polyisocyanaten synthetisiert werden können, wobei das Polyol und/oder das Polyisocyanat trifunktionell oder höherfunktionell ist. Ein entsprechender Duroplastvorläufer enthält somit beispielsweise ein Polyol, ein tritunktionelles Polyisocyanat und einen Katalysator, wie beispielsweise ein Amin oder eine metallorganische Verbindung. Epoxidharze können beispielsweise durch katalytische Polymerisation von Epoxiden oder durch Umsetzung von Epoxiden mit Diolen hergestellt werden, so dass ein entsprechender Epoxidharzvorläufer beispielsweise ein Epoxid, wie Epichlorhydrin, ein Diol, wie Bisphenol A, und einen Katalysator enthält. Hingegen handelt es sich bei duroplastischen Polyestern um vernetzte, Estergruppen enthaltende Polymere, so dass als Vorläufer für duroplastische Polyester beispielsweise eine Mischung aus einem Alkohol, einer Carbonsäure und einem Katalysator eingesetzt wird, wobei der Alkohol und/oder die Carbonsäure trifunictionell oder höherfunktionell ist. Vinylester schließlich werden beispielsweise durch die Veresterung von Epoxidharzen mit Acrylsäure oder Methacrylsäure hergestellt.

Grundsätzlich kann das erfindungsgemäße Verfahren so durchgeführt werden, dass der Polymervorläufer während der Imprägnierung und der nachfolgenden Pultrusion vollständig aushärtet. Allerdings hat es sich zumindest für einige Polymervorläufersysteme als prozesstechnisch einfacher erwiesen, den Polymervorläufer während der Imprägnierung und der nachfolgenden Pultrusion vorzuhärten und erst nach der Pultrusion vollständig auszuhärten. Aushärten bedeutet dabei die im Fall eines Thermoplastvorläufers vollständige Polymerisierung des Thermoplastvorläufers und im Fall eines Duroplastvorläufers die vollständige Vernetzung oder die vollständige Polymerisierung und Vernetzung des Duroplastvorläufers, wohingegen Vorhärten die lediglich teilweise, aber noch nicht vollständige Polymerisierung eines Thermaplastvorläufers bzw. die teilweise, aber noch nicht vollständige Vernetzung oder Polymerisierung und Vernetzung eines Duroplastvorläufers bezeichnet.

Zum Aushärten oder Vorhärten während der Imprägnierung und anschließenden Pultrusion kann der Polymervorläufer beispielsweise mittels einer in dem Pultrusionswerkzeug enthaltenen Erwärmungseinrichtung erwärmt werden, und zwar beispielsweise auf eine Temperatur von wenigstens 50 °C und bevorzugt von wenigstens 80 °C.

Gemäß einer weiteren vorteilhaften Ausführungsform der vorliegenden Erfindung wird der Polymervorläufer während der Imprägnierung in ein Pultrusionswerkzeug eingespritzt. Dadurch wird eine besonders gezielte und materialsparende Imprägnierung der Faserstruktur mit Polymervorläufer ermöglicht. Bevorzugt wird der Polymervorläufer bei dieser Ausführungsform mit einem Druck zwischen 1 und 50 bar in das Pultrusionswerkzeug eingespritzt.

Vorzugsweise umfasst das Pultrusionswerkzeug ein Formgebungswerkzeug. Dabei kann das Formgebungswerkzeug eine formgebende Düse sein oder umfassen, durch welche die Faserstruktur hindurch gezogen wird, so dass der Querschnitt der Faserstruktur zumindest annähernd auf einen durch die formgebende Düse vorgegebenen Querschnitt gebracht wird. In diesem Fall ist es bevorzugt, wenn der Polymervorläufer in dem Schritt a) in das Formgebungswerkzeug, bevorzugt in die formgebende Düse des Formgebungswerkzeugs, eingespritzt wird. Ferner ist es in diesem Fall bevorzugt, den zur Imprägnierung verwendeten Polymervorläufer mittels eines Dosiersystems in das Pultrusionswerkzeug einzuspritzen.

Ein weiterer Gegenstand der vorliegenden Erfindung ist ein kontinuierliches Verfahren zur Herstellung eines ummantelten faserverstärkten Verbundwerkstoffs, bei dem durch ein zuvor beschriebenes Verfahren ein faserverstärkter Verbundwerkstoff hergestellt wird und dieser anschließend mittels Extrusion zumindest bereichsweise mit einer Schicht aus einem Polymer ummantelt wird. Die vorstehend in Bezug auf die Herstellung des faserverstärkten Verbundwerkstoffs beschriebenen Ausführungsformen und Vorteile finden entsprechend für die Herstellung des ummantelten faserverstärkten Verbundwerkstoffs Anwendung.

Durch die Extrusion wird eine den faserverstärkten Verbundwerkstoff, beispielsweise Zugträger, zumindest bereichsweise umgebende Polymerschicht hergestellt, die sich mit dem Matrixmaterial des Verbundwerkstoffs verbindet, so dass eine belastungsfähige stoffschlüssige Verbindung zwischen dem faserverstärkten Verbundwerkstoff und der diesen umgebenden Polymerschicht geschaffen wird. Aufgrund der auf diese Weise aufgebrachten äußeren Polymerschicht wird zum einen eine den faserverstärkten Verbundwerkstoff vor mechanischen Einwirkungen schützende Umhüllung geschaffen und werden außerdem die elastischen Eigenschaften des hergestellten ummantelten faserverstärkten Verbundwerkstoffs in gewünschter Weise eingestellt. Eine solche Ummantelung ist insbesondere dann besonders vorteilhaft, wenn mit dem erfindungsgemäßen Verfahren ein ummantelter Zugträger bzw. Tragmittel für eine Lastanwendung, wie zum Beispiel ein Aufzugsystem, hergestellt wird- Die Ummantelung schützt dabei den durch den faserverstärkten Verbundwerkstoff ausgebildeten Zugträger und dient außerdem zur Übertragung von Kräften, die beispielsweise von einer Antriebs- oder Umlenkrolle eines Aufzugsystems auf die Ummantelung ausgeübt werden, auf den Zugträger.

Prinzipiell kann für die Ummantelung ein beliebiges Polymer eingesetzt werden, solange dies extrudierbar ist, Gute Ergebnisse werden dabei jedoch insbesondere erhalten, wenn hierzu ein Thermoplast und besonders bevorzugt ein thermoplastisches Elastomer eingesetzt wird.

Gemäß einer vorteilhaften Ausführungsform der vorliegenden Erfindung wird zur Ummantelung des faserverstärkten Verbundwerkstoffs ein Polymer eingesetzt, welches aus der Gruppe ausgewählt wird, welche aus thermoplastischen Polyolefinen, thermoplastischen Polyurethanen, thermoplastischen Stärken, thermoplastischen Kautschuken, elastomeren Kautschuken und beliebigen Mischungen aus zwei oder mehr der vorgenannten Verbindungen besteht.

Grundsätzlich kann die Extrusion bei jeder geeigneten Temperatur durchgeführt werden, wobei das Polymer während der Extrusion beispielsweise auf eine Temperatur zwischen 100 °C und 400 °C, bevorzugt zwischen 150 °C und 300 °C und besonders bevorzugt zwischen 180 °C und 250 °C erwärmt wird. Hierdurch lässt sich mit den gängigen Thermoplasten und thermoplastischen Elastomeren ein gut fließfähiges Extrudat mit guten Hafteigenschaften erzeugen, welches zu einer gleichmäßigen Ummantelung des Zugträgers und zu einer sehr festen stoffschlüssigen Verbindung zwischen der Ummantelung und dem faserverstärkten Verbundwerkstoff führt.

Um das Polymermaterial während der Extrusion besonders kontrolliert auf den Zugträger aufzubringen und insbesondere eine genaue Kontrolle über die Dicke der aufgebrachten Polymerschicht zu ermöglichen, wird das Polymer für die Ummantelung auf den imprägnierten Zugträger bevorzugt im Wesentlichen senkrecht zu der Längsrichtung des Zugträgers extrudiert. Zum Extrudieren des Polymers kann dabei eine Extrusionsdüse verwendet werden, deren Austrittsöffnung im Wesentlichen senkrecht zur Längsrichtung des imprägnierten Zugträgers auf den imprägnierten Zugträger gerichtet ist.

Zum Imprägnieren kann generell eine im Wesentlichen ringförmige Extrusionsdüse verwendet werden, durch welche der zu ummantelnde Verbundwerkstoff hindurch läuft. Dadurch kann in einfacher Weise eine vollumfängliche Ummantelung des faserverstärkten Verbundwerkstoffs mit hoher Gleichmäßigkeit erreicht werden. Dies kann in besonders geeigneter Weise dadurch erreicht werden, dass das Polymer durch einen Querspritzkopf auf den faserverstärkten Verbundwerkstoff extrudiert wird.

Ebenfalls beschrieben ist ein faserverstärkter Verbundwerkstoff, insbesondere Zugträger, oder ein ummantelter faserverstärkter Verbundwerkstoff, welcher durch ein zuvor beschriebenes Verfahren erhältlich ist. Die vorstehend in Bezug auf die Verfahren beschriebenen vorteilhaften Ausführungsformen und Vorteile gelten entsprechend für den erfindungsgemäßen faserverstärkten Verbundwerkstoff bzw. ummantelten faserverstärkten Verbundwerkstoff.

Der zuvor beschriebene faserverstärkte Verbundwerkstoff und insbesondere mit einer Polymerschicht ummantelte faserverstärkte Verbundwerkstoff kann insbesondere als Tragmittel ausgebildet sein und eignet sich hervorragend zur Verwendung als Tragmittel in einer Lastanwendung, bevorzugt in einer Förderanlage, in einer Transportanlage, in einer Zuganlage, in einer Maschine zur Zug- oder Kraftübertragung oder in einem Aufzugsystem und besonders bevorzugt in einem Personenaufzugsystem.

Ferner betrifft die vorliegende Erfindung eine Vorrichtung zur kontinuierlichen Herstellung eines faserverstärkten Verbundwerkstoffs mit mehreren in einer Matrix eingebetteten Fasern, welche umfasst:
- eine Zuführeinrichtung zur kontinuierlichen Zuführung von wenigstens zwei Rovings,
- eine Spreizeinrichtung zum Spreizen der wenigstens zwei Rovings und
- eine Zusammenführungseinrichtung zum Zusammenführen der wenigstens zwei gespreizten Rovings, so dass die wenigstens zwei zusammengeführten Rovings jeweils eine von wenigstens zwei zumindest bereichsweise übereinander angeordneten und/oder nebeneinander angeordneten Faserschichten bilden, wobei die Spreizeinrichtung wenigstens eine Spreizeinheit zum Spreizen zumindest eines der wenigstens zwei Rovings und einen der Spreizeinheit zugeordneten Regelkreis umfasst, wobei der Regelkreis einen Sensor zum Erfassen einer Spreizgüte des zumindest einen gespreizten Rovings und eine Verstelleinheit zum Einstellen des Spreizprozesses dieses Rovings in Abhängigkeit von der erfassten Spreizgüte umfasst.

Bei der Zusammenführungseinrichtung kann es sich beispielsweise um ein Pultrusionswerkzeug handeln.

Die Spreizeinrichtung der Vorrichtung umfasst vorzugsweise wenigstens eine Spreizeinheit zum Spreizen zumindest eines der wenigstens zwei Rovings, die zwei insbesondere gekrümmte Walzen umfasst, zwischen denen ein Zwischenraum ausbildet ist, durch den hindurch ein Roving durchführbar ist. Erfindungsgemäß umfasst die Spreizeinrichtung wenigstens eine Spreizeinheit zum Spreizen zumindest eines der wenigstens zwei Rovings und einen der Spreizeinheit zugeordneten Regelkreis, wobei der Regelkreis einen Sensor zum Erfassen einer Spreizgüte des zumindest einen gespreizten Rovings und eine Verstelleinheit zum Einstellen des Spreizprozesses dieses Rovings in Abhängigkeit von der erfassten Spreizgüte umfasst.

Beispielsweise kann der Sensor eine optische Erfassungsvorrichtung umfassen, die ein ortsaufgelöstes Bild des gespreizten Rovings aufnimmt.

Nachfolgend wird die vorliegende Erfindung beispielhaft anhand vorteilhafter Ausführungsformen unter Bezugnahme auf die beigefügten Figuren beschrieben. Es zeigen:
- Fig. 1: eine Vorrichtung zur Herstellung eines faserverstärkten Verbundwerkstoffs nach einem beispielhaften, nicht erfindungsgemäßen Verfahren,
- Fig. 2: einen Querschnitt entlang der Linie A-A aus der Fig. 1,
- Fig. 3: einen Querschnitt entlang der Linie B-B aus der Fig. 2,

- Fig. 4: eine Vorrichtung zur Herstellung eines faserverstärkten Verbundwerkstoffs nach einem beispielhaften, nicht erfindungsgemäßen Verfahren,

- Fig. 5: einen Querschnitt entlang der Linie A-A aus den Fig. 4 und 7,
- Fig. 6: einen Querschnitt entlang der Linie B-B aus den Fig. 4 und 7 und
- Fig. 7: eine Vorrichtung zur Herstellung eines faserverstärkten Verbundwerkstoffs nach einem Verfahren gemäß einer weiteren Ausführungsform der vorliegenden Erfindung.

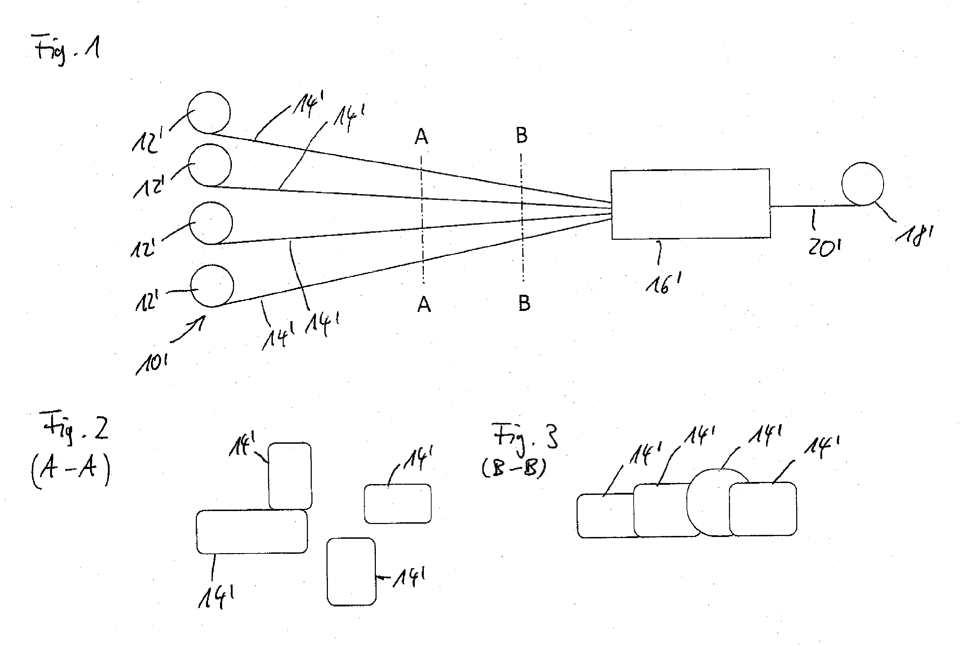

Die Fig. 1 zeigt eine Fertigungslinie zur Herstellung eines faserverstärkten Verbundwerkstoffs nach einem beispielhaften, nicht erfindungsgemäßen Verfahren. Die Fertigungslinie umfasst in Förderrichtung aufeinander folgend die nachstehend beschriebenen Stufen.

Eine Zuführeinrichtung 10' umfasst mehrere als Rollen ausgebildete Zuführeinheiten 12', die kontinuierlich Rovings 14' bereitstellen. An die Zuführeinrichtung 10' schließt sich eine Imprägniereinrichtung 16' au. Die Imprägniereinrichtung 16' umfasst ein Pultrusionswerkzeug, in das die Rovings 14' eingezogen werden, und eine Zieheinheit zum Ziehen der Rovings 14'. An die Imprägniereinrichtung 16' schließt sich eine Aufwickeleinheit 18' an, auf die der in der Imprägniereinrichtung 16' erzeugte faserverstärkte Verbundwerkstoff 20' aufgewickelt wird.

Die Fig. 2 und 3 zeigen die Rovings 14' in einer entlang der in der Fig. 1 gezeigten Linien A-A bzw. B-B geschnittenen Ansicht. Dabei sind jeweils nur die Querschnitte der Rovings 14' und nicht die einzelnen in den Rovings 14' enthaltenen Fasern dargestellt.

Aufgrund des ungesteuerten Einlaufens der Rovings 14' in die lmprägniereinrichtung 16' ergibt sich eine im Wesentlichen zufällige und nicht reproduzierbare gegenseitige Anordnung der Rovings 14', die nicht zu einer steuerbaren Faserverteilung in dem faserverstärkten Verbundwerkstoff 20' führt. Durch die nicht steuerbare Zusammenführung der Rovings 14' wird außerdem die Ausrichtung der in den Rovings 14' enthaltenen Fasern gestört, so dass zum Beispiel in den Randbereichen der Rovings 14' verstärkt schräg und insbesondere schlangenförmig zu der Längsrichtung der Rovings 4' verlaufende Fasern auftreten.

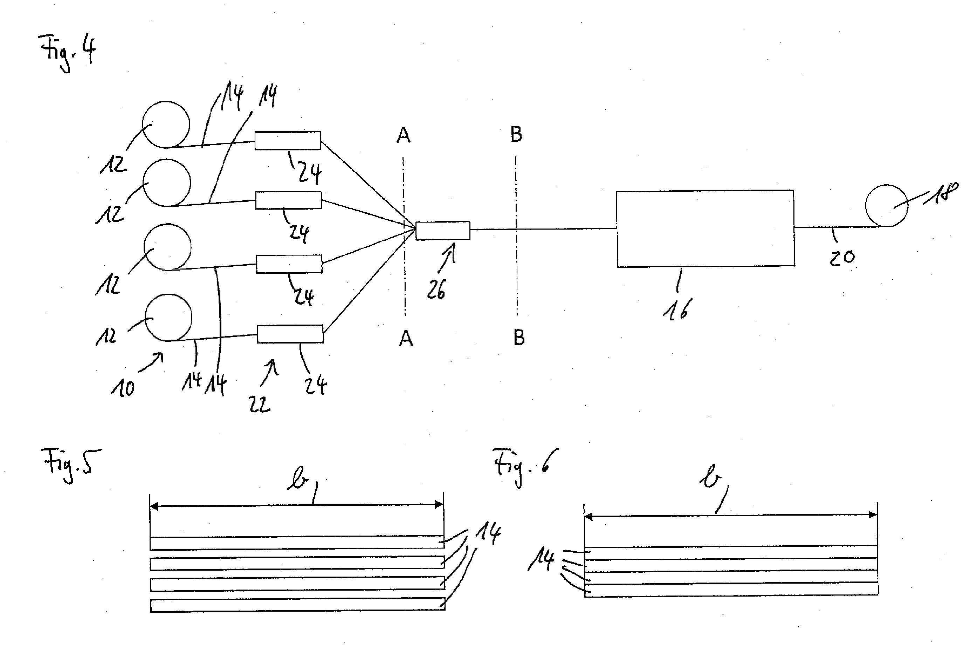

In der Fig. 4 ist eine Vorrichtung zur Herstellung eines faserverstärkten Verbundwerkstoffs gezeigt.

In den Fig. 1 bis 7 sind einander entsprechende Elemente jeweils mit den gleichen Bezugsziffern gekennzeichnet, wobei in den Fig. 1 bis 3 entsprechend gestrichelte Bezugszeichen (10', 12' usw,) und in den Fig. 4 bis 7 die entsprechenden ungestrichelten Bezugszeichen zu, 12 usw.) verwendet sind.

Die in der Fig. 4 gezeigte Vorrichtung unterscheidet sich von der in der Fig. 1 gezeigten dadurch, dass in der Förderrichtung vor der Imprägniereinrichtung 16 eine Spreizeinrichtung 22 vorgesehen ist, die für jedes Roving 14 eine Spreizeinheit 24 umfasst, in der das jeweilige Roving 14 auf einen gegenüber dem ungespreizten Roving 14 verbreiterten, im Wesentlichen bandförmigen Querschnitt mit einer Breite b gebracht wird, wie dies in der Fig. 5 gezeigt ist.

In der Förderrichtung hinter der Spreizeinrichtung 22 ist ferner eine Zusammenführungseinrichtung 26 vorgesehen, welche die gespreizten Rovings 14 so zusammenführt, dass die zusammengeführten Rovings 14, wie in der Fig. 6 gezeigt, jeweils vollständig übereinander angeordnete Faserschichten sind. Die Zusammenführungseinrichtung 26 kann zum Beispiel eine Öffnung umfassen, durch welche die Rovings 14 hindurch laufen, und/oder eine oder mehrere Rollen, auf denen die Rovings 14 ablaufen. Eine Zusammenführungseinrichtung könnte prinzipiell auch ganz oder teilweise durch die Pultrusionseinrichtung oder einen Bestandteil der Pultrusionseinrichtung oder des Pultrusionswerkzeugs, z.B. eine Pultrusionsdüse, gebildet sein.

Wie in den Fig. 5 und 6 ersichtlich, wird durch die Spreizung ein wohldefinierter Querschnitt der aus den mehreren zusammengeführten Rovings 14 entstandenen Faserstruktur geschaffen, wobei außerdem die in den Rovings 14 enthaltenen Fasern bezüglich ihrer Verteilung vergleichmäßigt und vermehrt in Längsrichtung des Rovings 14 ausgerichtet sind.

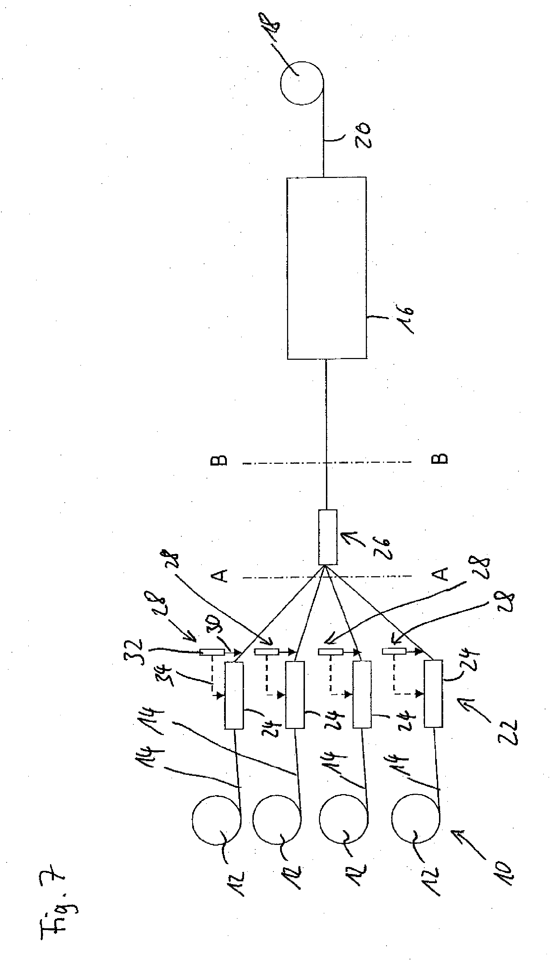

Die in der Fig. 7 gezeigte Vorrichtung unterscheidet sich von der in der Fig. 4 gezeigten Vorrichtung darin, dass jede Spreizeinheit 24 einen Regelkreis 28 mit einem Sensor 30 zur Erfassung der Spreizgüte und einer Verstelleinheit 32 mit einer Steuerleitung 34 zum Einstellen des von der Spreizeinheit 24 ausgeführten Spreizprozesses in Abhängigkeit von der erfassten Spreizgüte umfasst.

Die in den Fig. 4 und 7 gezeigten Vorrichtungen könnten jeweils noch eine Extrusionseinrichtung umfassen, mittels der eine polymere Ummantelung auf die erzeugten faserverstärkten Verbundwerkstoffe 20 aufgebracht wird.

### Bezugszeichenliste

- 10', 10: Zuführeinrichtung
- 12', 12: Zuführeinheit
- 14', 14: Roving
- 16', 16: lmprägniereinrichtung
- 18', 18: Aufwickeleinheit
- 20', 20: faserverstärkter Verbundwerkstoff
- 22: Spreizeinrichtung
- 24: Spreizeinheit
- 26: Zusammenführungseinrichtung
- 28: Regelkreis
- 30: Sensor
- 32: Verstelleinheit
- 34: Steuerleitung
- b: Breite

## Patentansprüche

1. Kontinuierliches Verfahren zur Herstellung eines faserverstärkten Verbundwerkstoffs (20) aus mehreren in einer Polymermatrix eingebetteten Fasern, insbesondere eines Zugträgers, welches die Schritte umfasst:
- Bereitstellen von wenigstens zwei Rovings (14),
- Spreizen der wenigstens zwei Rovings (14),
- Zusammenführen der wenigstens zwei gespreizten Rovings (14) so, dass die wenigstens zwei zusammengeführten Rovings (14) zumindest bereichsweise übereinander und/oder nebeneinander angeordnete Faserschichten ausbilden,
- Imprägnieren der wenigstens zwei zusammengeführten Rovings (14) mit einem Polymer und/oder einem Polymervorläufer und
- Pultrudieren der wenigstens zwei imprägnierten Rovinge,
**dadurch gekennzeichnet, dass** zumindest einer der wenigstens zwei Rovings (14) durch einen geregelten Spreizprozess gespreizt wird, wobei der geregelte Spreizprozess das Erfassen der aktuellen Spreizgüte des zumindest einen gespreizten Rovings (14) und das Steuern des Spreizvorgangs dieses Rovings (14) in Abhängigkeit von der erfassten aktuellen Spreizgüte umfasst.

2. Verfahren nach Anspruch 1,
**dadurch gekennzeichnet, dass**
bei dem Spreizen die Breite der Rovings (14) um wenigstens 50 %, bevorzugt um wenigstens 75 %, besonders bevorzugt um wenigstens 100 %, ganz besonders bevorzugt um wenigstens 150 % und höchst bevorzugt um wenigstens 300 % erhöht wird.

3. Verfahren nach Anspruch 1 oder 2,
dadurchgekennzeichnet, dass
das Erfassen der aktuellen Spreizgüte das Erfassen zumindest eines Parameters des gespreizten Rovings (14) umfasst, der aus der Gruppe ausgewählt wird, die aus der Breite des gespreizten Rovings, dem Vorhandensein von Lücken in dem gespreizten Roving (14), der Verteilung von Lücken in dem gespreizten Roving (14) und der Lage von Lücken in dem gespreizten Roving (14) besteht.

4. Verfahren nach zumindest einem der vorstehenden Ansprüche,
**dadurch gekennzeichnet, dass**
das Erfassen der aktuellen Spreizgüte das Aufnehmen und Auswerten eines ortsaufgelösten Bildes des gespreizten Rovings (14) umfasst.

5. Verfahren nach zumindest einem der vorstehenden Ansprüche,
**dadurch gekennzeichnet, dass**
wenigstens ein Carbonfasern enthaltender Roving (14) eingesetzt wird, welcher bevorzugt wenigstens zu 50 %, besonders bevorzugt wenigstens zu 80 %, ganz besonders bevorzugt wenigstens zu 90 % und höchst bevorzugt vollständig aus Carbonfasern besteht.

6. Verfahren nach zumindest einem der vorstehenden Ansprüche,
**dadurch gekennzeichnet, dass**
wenigstens ein Roving (14) mit einer Faseranzahl zwischen 1.000 und 300.000, bevorzugt zwischen 12.000 und 60.000 und besonders bevorzugt zwischen 24.000 und 50.000 eingesetzt wird.

7. Verfahren nach zumindest einem der vorstehenden Ansprüche,
**dadurch gekennzeichnet, dass**
wenigstens ein Roving (14) eingesetzt wird, dessen Fasern ein Längengewicht zwischen 1 und 10 g/m, bevorzugt zwischen 2 und 5 g/m und besonders bevorzugt zwischen 3 und 4 g/m aufweisen.

8. Verfahren nach zumindest einem der vorstehenden Ansprüche,
**dadurch gekennzeichnet, dass**
wenigstens ein Roving (14) eingesetzt wird, dessen Fasern einen Durchmesser zwischen 5 und 10 µm und bevorzugt zwischen 6 und 7 µm aufweisen.

9. Verfahren nach Anspruch 8,
dadurchgekennzeichnet, dass
die wenigstens zwei zusammengeführten Rovings (14) mit einem Polymervorläufer imprägniert werden, der wenigstens ein reaktiver Thermoplastvorläufer, wenigstens ein reaktiver Duroplastvorläufer und/oder wenigstens ein Elastomer ist.

10. Kontinuierliches Verfahren zur Herstellung eines ummantelten faserverstärkten Verbundwerkstoffs,
**dadurch gekennzeichnet, dass**
ein faserverstärkter Verbundwerkstoff durch ein Verfahren nach zumindest einem der vorstehenden Ansprüche hergestellt wird und dieser mittels Extrusion zumindest bereichsweise mit einer Schicht aus einem Polymer ummantelt wird.

11. Vorrichtung zur kontinuierlichen Herstellung eines faserverstärkten Verbundwerkstoffs (20) mit mehreren in einer Matrix eingebetteten Fasern, welche umfasst:
- eine Zuführeinrichtung (10) zur kontinuierlichen Zuführung von wenigstens zwei Rovings (14),
- eine Spreizeinrichtung (22) zum Spreizen der wenigstens zwei Rovings (14) und
- eine Zusammenführungseinrichtung (26) zum Zusammenführen der wenigstens zwei gespreizten Rovings (14), so dass die wenigstens zwei zusammengeführten Rovings (14) jeweils eine von wenigstens zwei zumindest bereichsweise übereinander angeordneten und/oder nebeneinander angeordneten Faserschichten bilden,
**dadurch gekennzeichnet, dass**
die Spreizeinrichtung (22) wenigstens eine Spreizeinheit (24) zum Spreizen zumindest eines der wenigstens zwei Rovings (14) und einen der Spreizeinheit (24) zugeordneten Regelkreis (28) umfasst, wobei der Regelkreis (28) einen Sensor (30) zum Erfassen einer Spreizgüte des zumindest einen gespreizten Rovings (14) und eine Verstelleinheit (32) zum Einstellen des Spreizprozesses dieses Rovings (14) in Abhängigkeit von der erfassten Spreizgüte umfasst.

## Claims

1. Continuous method for producing a fibre-reinforced composite material (20) from a plurality of fibres embedded in a polymer matrix, in particular for producing a tension member, comprising the steps of:
- providing at least two rovings (14),
- spreading apart the at least two rovings (14),
- combining the at least two spread-apart rovings (14) such that the at least two combined rovings (14) form layers of fibres arranged one on top of the other and/or next to one another at least in regions,
- impregnating the at least two combined rovings (14) with a polymer and/or a polymer precursor, and
- pultruding the at least two impregnated rovings,
**characterised in that** at least one of the at least two rovings (14) is spread apart using a controlled spreading process, the controlled spreading process comprising measuring the current spreading quality of the at least one spread-apart roving (14) and controlling the process of spreading apart said roving (14) on the basis of the measured current spreading quality.

2. Method according to claim 1, **characterised in that**, when spreading said rovings apart, the width of the rovings (14) is increased by at least 50 %, preferably by at least 75 %, particularly preferably by at least 100 %, more particularly preferably by at least 150 % and most preferably by at least 300 %.

3. Method according to either claim 1 or claim 2, **characterised in that** measuring the current spreading quality involves measuring at least one parameter of the spread-apart roving (14), which is selected from the group consisting of the width of the spread-apart roving, the presence of holes in the spread-apart roving (14), the distribution of holes in the spread-apart roving (14) and the location of holes in the spread-apart roving (14),

4. Method according to at least one of the preceding claims, **characterised in that** measuring the current spreading quality involves taking and evaluating a spatially resolved image of the spread-apart roving (14).

5. Method according to a least one of the preceding claims, **characterised in that** at least one roving (14) containing carbon fibres is used, preferably at least 50 %, particularly preferably at least 80 %, more particularly preferably at least 90 % and most preferably all of which consists of carbon fibres.

6. Method according to at least one of the preceding claims, **characterised in that** at least one roving (14) having a fibre count of between 1,000 and 300,000, preferably between 12,000 and 60,000 and particularly preferably between 24,000 and 50,000 is used.

7. Method according to at least one of the preceding claims, **characterised in that** at least one roving (14) is used, the fibres of which have a mass per length of between 1 and 10 g/m, preferably between 2 and 5 g/m and particularly preferably between 3 and 4 g/m.

8. Method according to at least one of the preceding claims, **characterised in that** at least one roving (14) is used, the fibres of which have a diameter of between 5 and 10 µm, and preferably of between 6 and 7 µm.

9. Method according to claim 8, **characterised in that** the at least two combined rovings (14) are impregnated with a polymer precursor, which is at least one reactive thermoplastics precursor, at least one reactive thermoset precursor and/or at least one elastomer.

10. Continuous method for producing a coated fibre-reinforced composite material, **characterised in that** a fibre-reinforced composite material is produced by a method according to at least one of the preceding claims, and said material is coated with a polymer layer, at least in regions, by means of extrusion.

11. Device for continuously producing a fibre-reinforced composite material (20) comprising a plurality of fibres embedded in a matrix, which device comprises:
- a feed apparatus (10) for continuously feeding at least two ravings (14),
- a spreading apparatus (22) for spreading apart the at least two rovings (14), and
- a combining apparatus (26) for combining the at least two spread-apart rovings (14) so that the at least two combined rovings (14) each form one of at least two layers of fibres that are arranged one on top of the other and/or next to one another at least in portions,
**characterised in that** the spreading apparatus (22) comprises at least one spreading unit (24) for spreading apart at least one of the at least two rovings (14), and a control loop (28) associated with the spreading unit (24), the control loop (28) comprising a sensor (30) for measuring the spreading quality of the at least one spread-apart roving (14) and an adjustment unit (32) for adjusting the process of spreading apart said roving (14) on the basis of the measured spreading quality.

## Revendications

1. Procédé continu de production d'un matériau composite renforcé par des fibres (20) constitué de plusieurs fibres incorporées dans une matrice polymère, et notamment d'un tirant, comprenant les étapes consistant à :
- préparer au moins deux stratifils (14),
- écarquiller lesdits au moins deux stratifils (14),
- réunir lesdits au moins deux stratifils (14) écarquillés de telle façon que lesdits au moins deux stratifils (14) réunis forment des couches de fibres qui, au moins par endroits, sont superposées et/ou juxtaposées,
- imprégner lesdits au moins deux stratifils (14) réunis par un polymère et/ou un précurseur de polymère et
- effectuer la pultrusion desdits au moins deux stratifils imprégnés,
**caractérisé en ce qu'**au moins un desdits au moins deux stratifils (14) est écarquillé par un processus d'écarquillement régulé, le processus d''carquillement régulé comprenant la détection de la qualité d'écarquillement actuelle de l'au moins un stratifil (14) écarquillé et le pilotage de l'opération d'écarquillement de ce stratifil (14) en fonction de la qualité d'écarquillement actuelle détectée.

2. Procédé selon la revendication 1, **caractérisé en ce que**
lors de l'écarquillement, la largeur des stratifils (14) augmente d'au moins 50 %, de préférence d'au moins 75 %, de manière particulièrement préférée d'au moins 100 %, de manière tout particulièrement préférée d'au moins 150 % et de manière préférée entre toutes d'au moins 300 %.

3. Procédé selon la revendication 1 ou la revendication 2, **caractérisé en ce que** la détection de la qualité d'écarquillement actuelle comprend la détection d'au moins un paramètre du stratifil écarquillé (14), qui est sélectionné dans le groupe constitué de la largeur du stratifil écarquillé, de la présence de trous dans le stratifil écarquillé (14), de la répartition des trous dans le stratifil écarquillé (14) et de l'emplacement des trous dans le stratifil écarquillé (14).

4. Procédé selon au moins une des revendications précédentes **caractérisé en ce que** la détection de la qualité d'écarquillement actuelle comprend l'enregistrement et l'évaluation d'une image à résolution spatiale du stratifil (14) écarquillé.

5. Procédé selon au moins une des revendications précédentes **caractérisé en ce qu'**au moins un stratifil (14) contenant des fibres de carbone est utilisé, lequel est constitué de fibres de carbone de préférence au moins à 50 %, de manière particulièrement préférée au moins à 80 %, de manière tout particulièrement préférée au moins à 90 % et de manière préférée entre toutes en intégralité.

6. Procédé selon au moins une des revendications précédentes **caractérisé en ce qu'**au moins un stratifil (14) ayant un nombre de fibres compris entre 1 000 et 300 000, de préférence entre 12 000 et 60 000 et de manière particulièrement préférée entre 24 000 et 50 000, est utilisé,

7. Procédé selon au moins une des revendications précédentes **caractérisé en ce qu'**au moins un stratifil (14) est utilisé, dont les fibres possèdent une masse linéique comprise entre 1 et 10 g/m, de préférence entre 2 et 5 g/m et de manière particulièrement préférée entre 3 et 4 g/m.

8. Procédé selon au moins une des revendications précédentes **caractérisé en ce qu'**au moins un stratifil (14) est utilisé dont les fibres possèdent un diamètre compris entre 5 et 10 µm et de préférence entre 6 et 7 µm.

9. Procédé selon la revendication 8, **caractérisé en ce que** lesdits au moins deux stratifils (14) réunis sont imprégnés par un précurseur de polymère qui est au moins un précurseur réactif de thermoplastique, au moins un précurseur réactif de plastique thermodurcissable et/ou au moins un élastomère.

10. Procédé continu de production d'un matériau composite enrobé, renforcé par des fibres, **caractérisé en ce qu'**un matériau composite renforcé par des fibres est produit à l'aide d'un procédé selon au moins une des revendications précédentes et qu'il est enrobé au moins par endroits d'une couche de polymère, par extrusion.

11. Installation de production continue d'un matériau composite renforcé par des fibres (20) constitué de plusieurs fibres incorporées dans une matrice, laquelle comprend
- un dispositif d'alimentation (10) pour l'alimentation continue d'au moins deux stratifils (14),
- un dispositif d'écarquillement (22) pour l'écarquillement desdits au moins deux stratifils (14) et
- un dispositif de regroupement (26) pour la réunion desdits au moins deux stratifils (14) écarquillés de telle façon que lesdits au moins deux stratifils (14) réunis forment chacun une couche sur au moins deux couches de fibres qui, au moins par endroits, sont superposées et/ou juxtaposées,
**caractérisée en ce que**
le dispositif d'écarquillement (22) comprend au moins une unité d'écarquillement (24) pour l'écarquillement d'au moins un desdits au moins deux stratifils (14) et un circuit de régulation (28) associé à unité d'écarquillement (24), le circuit de régulation (28) comprenant un capteur (30) pour la détection de la qualité d'écarquillement de l'au moins un stratifil (14) écarquillé et une unité de réglage (32) pour le réglage du processus d'écarquillement de ce stratifil (14) en fonction de la qualité d'écarquillement détectée.
